Europäisches Patentamt

European Patent Office

Office européen des brevets

(19)

(11) Veröffentlichungsnummer: **0 329 066 B1**

## (12) EUROPÄISCHE PATENTSCHRIFT

(45) Veröffentlichungstag der Patentschrift: **11.11.92**

(21) Anmeldenummer: **89102484.6**

(22) Anmeldetag: **14.02.89**

(51) Int. Cl.⁵: **B23K 11/00**, B23K 9/00, A47J 36/02, A47J 37/00

(54) **Verfahren zur Herstellung eines dünnwandigen Metallgefässes mit angeschweisster Handhabe und Schweissvorrichtung zur Durchführung des Verfahrens.**

(30) Priorität: **19.02.88 DE 3805228**

(43) Veröffentlichungstag der Anmeldung:
**23.08.89 Patentblatt 89/34**

(45) Bekanntmachung des Hinweises auf die
Patenterteilung:
**11.11.92 Patentblatt 92/46**

(84) Benannte Vertragsstaaten:
**DE ES FR IT**

(56) Entgegenhaltungen:
**DE-A- 3 510 779**
**GB-A- 1 173 760**
**GB-A- 2 128 470**
**US-A- 2 798 248**

(73) Patentinhaber: **Heinrich Baumgarten KG Spezialfabrik für Beschlagteile**
**Postfach 1620**
**W-5908 Neunkirchen(DE)**

(72) Erfinder: **Baumgarten, Gerd-Diethard**
**Zur Johanneswiese 9a**
**W-5901 Wilnsdorf-Wilden(DE)**

(74) Vertreter: **Missling, Arne, Dipl.-Ing.**
**Patentanwälte Dipl.-Ing. R. Schlee Dipl.-Ing.**
**A. Missling Bismarckstrasse 43**
**W-6300 Giessen(DE)**

EP 0 329 066 B1

## Beschreibung

Die Erfindung betrifft ein Verfahren zur Herstellung eines mit einem Griff versehenes, dünnwandiges Metallgefäß mit einer Innenbeschichtung und einem Griff oder Tragteil, wobei nach dem Ausformen des Gefäßes im Befestigungsbereich des Griffes an der Außenfläche des Gefäßes eine Verstärkungsplatte aufgeschweißt wird, die Innenfläche des Gefäßes anschließend einer Beschichtungsbehandlung unterworfen und danach die Außenfläche des Gefäßes mechanisch gereinigt wird.

Die Erfindung betrifft auch eine Schweißvorrichtung für die Durchführung des Verfahrens zur Widerstandsschweißung mit zwei Elektroden, wobei die beiden Elektroden in einem engen Abstand nebeneinander angeordnet sind, die Elektrode federnd und isoliert an einer beide Elektroden tragenden Halterung gelagert ist, beide Elektroden mittels einer dünnen Isolierschicht getrennt direkt nebeneinanderliegend angeordnet sind und die Elektroden nebeneinander angeordnet doppelt vorhanden sind, wobei die mittleren Elektroden einstückig in Form einer Mittelelektrode ausgebildet sind.

Bei der Herstellung von Metallgefäßen, insbesondere von Kochgeschirren, Pfannen oder ähnlichem aus Edelstahl, erweist es sich als notwendig, das Metallgefäß an seiner Innenseite mit einer Antihaftbeschichtung zu versehen. Derartige Antihaftbeschichtungen, beispielsweise aus PTFE, wie etwa Teflon, müssen in einem separaten Arbeitsgang nach dem Ausformen des Metallgefäßes, welches beispielsweise durch Fließdrücken oder Tiefziehen hergestellt ist, aufgebracht werden. Die Aufbringung einer PTFE-Beschichtung erfolgt üblicherweise bei Temperaturen zwischen 300° C und 400° C, unter bestimmten Umständen auch bei Temperaturen über 400° C. Dabei tritt insbesondere bei aus Edelstahl gefertigten Metallgefäßen eine Oxidierung oder Verfärbung der nichtbeschichteten Oberfläche auf. Es ist somit erforderlich, nach der Beschichtung die Außenfläche des Metallgefäßes zu reinigen oder einer Oberflächenbehandlung zu unterwerfen, um die Oxidschichten oder die Anlaufverfärbung zu entfernen. Dies kann nach dem Stand der Technik auf chemische weise mittels einer Säurebehandlung erfolgen. Insbesondere im Hinblick auf die Umweltschutzbestimmungen erweisen sich derartige chemische Behandlungen als kostenintensiv und unpraktikabel. Die andere Möglichkeit zur Behandlung der Oberfläche besteht darin, diese durch mechanische Behandlung, beispielsweise durch Polieren oder Bürsten zu bearbeiten. Eine derartige Oberflächenbehandlung ist schnell und kostengünstig durchzuführen und wird deshalb bevorzugterweise angewendet.

Da es bei einem Metallgefäß, insbesondere einem Kochgeschirr oder ähnlichem, erforderlich ist, an der Außenseite zumindest ein Tragelement, wie etwa einen Griff oder einen Stiel anzubringen, ergeben sich hinsichtlich der eingangs genannten Arbeitsschritte erhebliche Probleme. Falls das Tragelement erst nach der Antihaftbeschichtung aufgebracht wird, ergeben sich beim Anschweißen des Tragelementes an die Wandung des Metallgefäßes Beschädigungen der Beschichtung, die nicht nur einen ungünstigen optischen Eindruck ausüben, sondern die auch zu äußerst ungewünschten Eigenschaften des Metallgefäßes führen, da im Bereich der Schweißnaht oder Schweißpunkte die Beschichtung zerstört wird. Die andere Möglichkeit besteht darin, das Tragelement bereits vor der Beschichtungsbehandlung anzuschweißen. In diesem Falle erweist sich jedoch die nachträgliche Reinigung oder Oberflächenbehandlung der Außenseite des Metallgefäßes als ausgesprochen schwierig und kostenintensiv, da eine maschinelle Bearbeitung ausscheidet, da nicht sichergestellt werden kann, daß im Bereich der Tragelemente eine vollständige Säuberung oder Reinigung erfolgen kann.

Aus der DE-A-35 10 779 ist ein Verfahren zur Verbindung von zwei oder mehr Blechen bekannt, wobei diese Bleche zunächst gemeinsam durchstochen und dann die dadurch entstandenen konzentrisch zueinander verlaufenden Randbereiche miteinander verschweißt werden. Zum Verschweißen dient das Widerstandsschweißen, wobei eine konisch ausgebildete erste Elektrode unmittelbar am Rand des innen eingezogenen Bleches angelegt wird und eine zweite Elektrode die Ränder übergreifend auf das gegenüberliegende Blech aufgesetzt wird. Aus der US-A-2,798,248 ist es bekannt, eine Befestigungsplatte an einem Topf anzuschweißen, an der dann ein Griff mittels eines mit Gewinde versehenen Hakens befestigt wird.

Der Erfindung liegt die Aufgabe zugrunde, ein Verfahren und eine Vorrichtung der eingangs genannten Art zu schaffen, welche bei einfachem Aufbau und einfacher, betriebssicherer Anwendbarkeit die Herstellung eines mit einer Innenbeschichtung versehenen und mit einem Tragelement oder Griff ausgestatteten Metallgefäßes ermöglicht, wobei die aus dem Stand der Technik bekannten Nachteile vermieden werden.

Hinsichtlich des Verfahrens wird die Erfindung dadurch gelöst, daß anschließend der Griff an der Verstärkungsplatte angeschweißt wird.

Das erfindungsgemäße Verfahren zeichnet sich durch eine Reihe erheblicher Vorteile aus. Da die Verstärkungsplatte vor dem Beschichten der Innenseite des Gefäßes angeschweißt wird, ist es möglich, diese Schweißverbindung mit einer ausreichenden Festigkeit, beispielsweise durch Punktschweißen, auszubilden. Da zu diesem Verfahrenszeitpunkt beide Seiten der Wandung des Metallgefäßes zugänglich sind, ist es insbesondere möglich, die Elektroden innen an der Gefäßwandung und an der Außenseite der Verstärkungsplatte anzuordnen um somit einen optimal kurzen Stromfluß zu erhalten. In diesem Verfahrensstadium ist es auch möglich, die Innenseite der Gefäßwandung, falls erforderlich, nach dem Schweißen nachzubearbeiten, beispielsweise durch Bürsten oder Schleifen, um eine möglichst glatte und ebene Gefäßinnenfläche zu schaffen. Bei einem anschließenden Beschichtungsvorgang der Innenfläche des Metallgefäßes erfolgt keine Störung durch die Verstärkungsplatte und die Schweißpunkte, da die Schweißstellen in geeigneter Weise ausgebildet sind und mit der restlichen Wandung des Metallgefäßes eine homogene Struktur aufweisen. Bei der nachfolgenden Reinigung oder Oberflächenbehandlung der Außenfläche des Gefäßes stellt die Verstärkungsplatte keine Störung dar, da diese sich nur geringfügig über die Umfangsfläche des Metallgefäße erhebt. Eine mechanische Bearbeitung beispielsweise mittels Bürsten oder Polierscheiben kann somit insbesondere maschinell und automatisch erfolgen. Eine Nachbearbeitung des Bereiches der Verstärkungsplatte ist ebenfalls nicht erforderlich, da auch die Übergangsbereiche zwischen der Verstärkungsplatte und der Gehäusewandung in ausreichendem Maße gereinigt werden können. Dies kann insbesondere durch eine leichte Anschrägung der Kante der Verstärkungsplatte erleichtert werden.

Bei einem anschließenden Aufschweißen des Griffes oder des Tragelementes kann der Schweißvorgang so ausgebildet sein, daß keine Beeinflussung der Wandung des Metallgefäßes erfolgt, sondern der Schweißvorgang lediglich zwischen dem Griff und der Verstärkungsplatte erfolgt. Somit ist eine Beschädigung der Innenbeschichtung des Metallgefäßes ausgeschlossen. Insbesondere bei der Verwendung eines Widerstands-Schweißverfahrens ist es möglich, den Stromfluß durch eine entsprechende, nachstehend im einzelnen noch zu beschreibende Anordnung der Elektroden so zu lenken, daß dieser nur durch die Verstärkungsplatte verläuft, nicht jedoch durch die Wandung des Metallgefäßes. Eine Erwärmung desselben und die damit verbundene Zerstörung der Beschichtung ist somit ausgeschlossen.

Erfindungsgemäß kann auf besonders einfache Weise eine größere Anzahl an Verstärkungsplatten und Griffen an dem Metallgefäß, beispielsweise einem Kochtopf, angebracht werden, ohne daß die Reinigung oder Behandlung der Außenfläche dadurch gestört würde oder ohne daß diese zu einer Schwächung oder Beschädigung der Innenbeschichtung des Metallgefäßes führen würde.

Eine besonders günstige Weiterbildung des erfindungsgemäßen Verfahrens ist dadurch gegeben, daß die Verstärkungsplatte mit einer Dicke doppelt so groß wie die Wandstärke des Gefäßes ausgebildet wird. Es ist somit möglich, das Gefäß selbst mit einer sehr dünnen Wanddicke auszubilden, welche nur so bemessen sein muß, daß die erforderliche Stabilität des Gefäßes gegeben ist. Da die Verbindungsplatte an einem größeren Flächenbereich der Gefäßwandung angeordnet ist, ergibt sich in diesem Bereich eine ausreichende Stabilität, um eine Kraftübertragung auf den Griff oder das Tragelement zu gewährleisten. Weiterhin erweist sich diese Dimensionierung hinsichtlich der Eindringtiefe des Schweißstromes als besonders günstig.

Hinsichtlich der Vorrichtung wird die erfindungsgemäße Aufgabe dadurch gelöst, daß die die Mittelelektrode von den doppelten Elektroden zumindest 3-seitig umfaßt wird. Dies erweist sich aus den oben beschriebenen Gründen als besonders vorteilhaft, da auf diese Weise die Eindringtiefe des Schweißstromes und damit die Erwärmung verringert werden kann. Somit wird die Wandung des Metallgefäßes und insbesondere die Innenbeschichtung nicht beeinträchtigt.

Eine besonders günstige Weiterbildung der erfindungsgemäßen Schweißvorrichtung ist dadurch gegeben, daß zumindest eine Elektrode federnd an einer beide Elektroden halternden Halterung gelagert ist. Durch diese Ausgestaltung ist sichergestellt, daß die Elektrode stets in erforderlicher Weise gegen die zu verschweißende Fläche anliegt, wobei es sich insbesondere bei gewölbten Flächen als besonders vorteilhaft erweist, diese Wölbung durch eine federnde Lagerung der Elektrode ausgleichen zu können. Auf diese Weise ist es möglich, die Schweißvorrichtung für Metallgefäße verschiedenen Durchmessers und verschiedener Ausgestaltung zu verwenden.

Eine vorteilhafte Weiterbildung der Schweißvorrichtung ist auch dadurch gegeben, daß die Elektroden nebeneinander angeordnet doppelt vorhanden sind, wobei die mittleren Elektroden einstückig in Form einer Mittelelektrode ausgebildet sind. Dabei kann die Mittelelektrode eine zentrische Ausnehmung zur Durchführung eines zu verschweißenden Gegenstandes aufweisen. Es ist somit möglich, das Tragelement, beispielsweise einen Griff oder Stiel, mittels eines einzigen Schweißwwerkzeuges in einem einzigen Arbeitsgang anzuschweißen. Dies erweist sich auch dadurch als Vorteilhaft, daß eine zusätzliche Halterung des zu verschweißenden Griffes oder Tragelementes nicht erforderlich ist, da dieses durch die Schweißvorrichtung selbst gehalten und zugeführt werden kann.

Im folgenden wird die Erfindung anhand eines Ausführungsbeispiels in Verbindung mit der Zeichnung beschrieben. Dabei zeigt:

Fig. 1    eine schematische Draufsicht, im Schnitt, auf einen Teil des erfindungsgemäß ausgebildeten Metallgefäßes und Ansicht der erfindungsgemäßen Schweißvorrichtung im Schnitt nach Linie I-I;

Fig. 2     eine Seitenansicht im Schnitt entlang Linie II-II von Fig. 2 und

Fig. 3     eine Stirnansicht auf die erfindungsgemäße Schweißvorrichtung.

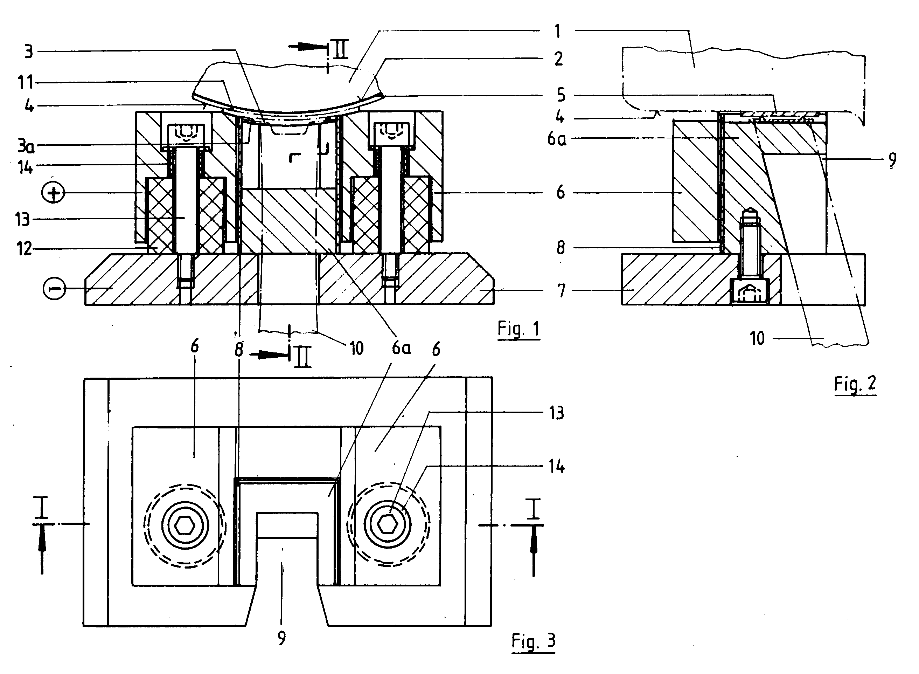

In Fig. 1 ist in schematischer Weise in der Draufsicht ein Metallgefäß 1 dargestellt, welches beispielsweise in Form eines Kochtopfes ausgebildet sein kann. Das Metallgefäß 1 weist eine Innenbeschichtung 2 auf, welche beispielsweise in Form einer Teflonbeschichtung ausgebildet sein kann. An einer Außenfläche 4 des Metallgefäßes 1 ist eine Verstärkungsplatte 5 angeschweißt, welche in ihrer Ausgestaltung der Form der Wandung des Metallgefäßes 1 angepaßt ist. Die Verschweißung der Verstärkungsplatte 5 mit der Wandung des Metallgefäßes 1 erfolgt über mehrere Schweißpunktell, beispielsweise mittels eines Punktschweißverfahrens oder Widerstandsschweißverfahrens. Bei dem gezeigten Ausführungsbeispiel ist die Verstärkungsplatte 5 bereits mit der Wandung des Metallgefäßes 1 verschweißt, das Metallgefäß ist bereits mit einer Innenbeschichtung versehen. Auch wurde bereits der Reinigungsvorgang für die Außenfläche 4 des Metallgefäßes 1 und die mit dieser verbundene Verstärkungsplatte 5 durchgeführt. In Fig. 1 ist in schematischer Weise in der Ansicht (im Schnitt) die erfindungsgemäße Schweißvorrichtung dargestellt. Diese weist zwei äußere Elektroden 6 auf, sowie eine Mittelelektrode 6a. Die Elektroden 6, 6a sind jeweils mittels einer Isolierschicht 8 gegeneinander isoliert und sind direkt nebeneinanderliegend angeordnet. Die Elektrode 6 liegt mit ihrer Wirkfläche gegen die Verstärkungsplatte 5 an, während die Elektrode 6a mit ihrer Wirkfläche an einem seitlichen Bereich 3a des Griffes 10 anliegt, welcher beispielsweise in Form eines Flansches ausgebildet sein kann. Die außenliegenden Elektroden 6 sind über ein Federelement 12 an einer Halterung 7 gelagert, an welcher auch die Mittelelektrode 6a gelagert ist. Dies ist in Fig. 1 nur schematisch dargestellt, die Fig. 2 und 3 zeigen die Ausgestaltung der Elektroden und deren Lagerung im Detail.

Fig. 2 zeigt, in einer Seitenansicht (im Schnitt) das Metallgefäß und die Schweißvorrichtung, in Fig. 3 ist die Stirnansicht von Fig. 1 dargestellt. Aus den Fig. 2 und 3 ist zu ersehen, daß die Mittelelektrode 6a mit einer Ausnehmung 9 versehen ist, durch welche ein mit der Verstärkungsplatte 5 zu verschweißender Gegenstand 10, beispielsweise ein Griff für eine Pfanne, durchführbar ist. Die Ausnehmung 9 ist in ihrer Dimensionierung so bemessen, daß der zu verschweißende Gegenstand 10 durch die Schweißvorrichtung geführt werden kann, so daß keine zusätzlichen Halterungsvorrichtungen erforderlich sind. Die Halterung 7 der Schweißvorrichtung trägt, wie in Fig. 2 ersichtlich, direkt die Mittelelektrode 6a, welche beispielsweise mittels einer Schraubverbindung mit der Halterung 7 verbunden ist. Die Mittelelektrode 6a weist eine Wirkfläche oder Schweißfläche auf, welche so bemessen ist, daß diese gegen den zu verschweißenden seitlichen Bereich oder Flansch 3a des Griffes 10 anliegt. Die Elektroden 6 sind in dem vorliegenden Ausführungsbeispiel einstückig ausgebildet und so dimensioniert, daß sie, benachbart zu der Mittelelektrode 6a gegen die Verstärkungsplatte 5 anliegen. Im gezeigten Ausführungsbeispiel weist, wie in Fig. 3 dargestellt, die Elektrodenanordnung 6 im wesentlichen einen U-förmigen Querschnitt auf. Die Elektroden 6 sind direkt benachbart zu der Mittelelektrode 6a angeordnet und sind durch die Isolierschicht 8 elektrisch von dieser getrennt. Die Elektroden 6 sind weiterhin über das Federelement 12, welches beispielsweise in Form eines Gummikissens mit isolierenden Eigenschaften ausgebildet sein kann, an der Halterung 7 gelagert. Durch diese federnde Lagerung ist es möglich, einen Toleranzausgleich zu schaffen, wodurch eine sichere Anlage der Elektrode 6 gegen die Verstärkungsplatte 5 sichergestellt wird. Die Befestigung der Elektroden 6 an der Halterung 7 erfolgt durch Schrauben 13, welche mittels Isolierhülsen 14 gegen die Elektroden 6 isoliert sind.

Bei dem gezeigten Ausführungsbeispiel ist die Halterung 7 und somit auch die Mittelektrode 6a mit einem negativen Pol der Schweißvorrichtung verbunden, während die Elektroden 6 mit einem Pluspol in Verbindung stehen.

Es ist insbesondere möglich, die Form und Ausgestaltung der Schweißvorrichtung den jeweiligen Ausgestaltungsformen der Tragelemente, Griffe oder Stiele sowie der Größe und Ausbildung des Metallgefäßes und der Verstärkungsplatte anzupassen. Weiterhin ist es möglich, die Verstärkungsplatte in Übereinstimmung mit der Ausgestaltung der Griffe entsprechend zu dimensionieren. Auch ist es möglich, bei der Ausbildung der Schweißverbindungen zwischen der Verstärkungsplatte und dem Metallgefäß bzw. zwischen der Verstärkungsplatte und dem Griff Vorkehrungen zur Wärmeisolierung während des Gebrauchs des Metallgefäßes zu treffen, beispielsweise durch Anordnung eines Luftspaltes oder durch Auswahl und Dimensionierung der Schweißpunkte. Auch ist die Erfindung nicht auf das beschriebene Schweißverfahren beschränkt, so ist es insbesondere möglich, die Verstärkungsplatte mittels eines beliebigen anderen Schweißverfahrens mit dem Metallgefäß zu verbinden. Auch ist es möglich, die Reinigung der Außenfläche des Metallgefäßes nach der Beschichtungsbehandlung auf beliebige andere Weise vorzunehmen.

**Patentansprüche**

1.  Verfahren zur Herstellung eines mit einem Griff (3, 10) versehenes, dünnwandiges Metallgefäß (1) mit einer Innenbeschichtung (2) und einem Griff oder Tragteil (3, 10), wobei nach dem Ausformen des Gefäßes (1) im Befestigungsbereich des Griffes (3, 10) an der Außenfläche (4) des Gefäßes (1) eine Verstärkungsplatte aufgeschweißt wird, die Innenfläche des Gefäßes (1) anschließend einer Beschichtungsbehandlung unterworfen und danach die Außenfläche (4) des Gefäßes (1) mechanisch gereinigt wird, dadurch gekennzeichnet, daß anschließend der Griff (3, 10) an der Verstärkungsplatte (5) angeschweißt wird.

2.  Verfahren nach Anspruch 1, dadurch gekennzeichnet, daß mehrere Verstärkungsplatten (5) und Griffe (3, 10) angebracht werden.

3.  Verfahren nach Anspruch 1 oder 2, dadurch gekennzeichnet, daß die Außenfläche (4) mittels einer Schleif- oder Bürstvorrichtung automatisch gereinigt wird.

4.  Verfahren nach einem der Ansprüche 1 bis 3, dadurch gekennzeichnet, daß die Verschweißung der Verstärkungsplatte (5) und des Gefäßes (1) durch Widerstandsschweißen erfolgt.

5.  Verfahren nach Anspruch 4, dadurch gekennzeichnet, daß die Schweißelektroden (6 und 6a) zum Anschweißen des Griffes (3, 10) in einem sehr geringen seitlichen Abstand an der Verstärkungsplatte (5) des Gefäßes (1) gehalten werden, so daß der Strom seitlich durch die Verstärkungsplatte (5) zur Schweißstelle (3a) des Griffes (10, 3) geführt wird.

6.  Verfahren nach einem der Ansprüche 1 bis 5, dadurch gekennzeichnet, daß die Verstärkungsplatte (5) mit einer Dicke ca. doppelt so groß wie die Wandstärke des Gefäßes (1) ausgebildet wird.

7.  Schweißvorrichtung für die Durchführung des Verfahrens nach Anspruch 1 zur Widerstandsschweißung mit zwei Elektroden, wobei die beiden Elektroden (6 und 6a) in einem engen Abstand nebeneinander angeordnet sind, die Elektrode (6) federnd und isoliert an einer beide Elektroden tragenden Halterung (7) gelagert ist, beide Elektroden (6 und 6a) mittels einer dünnen Isolierschicht getrennt direkt nebeneinanderliegend angeordnet sind und die Elektroden (6) nebeneinander angeordnet doppelt vorhanden sind, wobei die mittleren Elektroden einstückig in Form einer Mittelelektrode (6a) ausgebildet sind, dadurch gekennzeichnet, daß die Mittelelektrode (6a) von den doppelten Elektroden (6) zumindest 3-seitig umfaßt wird.

8.  Schweißvorrichtung nach Anspruch 7, dadurch gekennzeichnet, daß die Mittelelektrode (6a) eine zentrische Ausnehmung (9) zur Durchführung eines zu verschweißenden Gegenstandes (10, 3) aufweist.

**Claims**

1.  A method for manufacturing a thin-walled metal vessel (1) provided with a handle (3, 10) with an inner coating (2) and a handle or carrying element (3, 10), wherein after the molding of the vessel (1) a reinforcing plate is welded onto the outer surface (4) of the vessel (1) in the securing region of the handle (3, 10), the inner surface of the vessel (1) subsequently undergoing a coating treatment and then the outer surface (4) of the vessel (1) being mechanically cleaned, characterised in that the handle (3, 10) is subsequently welded onto the reinforcing plate (5).

2.  A method according to claim 1, characterised in that a plurality of reinforcing plates (5) and handles (3, 10) are fitted.

3.  A method according to claim 1 or 2, characterised in that the outer surface (4) is automatically cleaned by means of a grinding or brushing device.

4.  A method according to one of claims 1 to 3, characterised in that the welding of the reinforcing plate (5) and of the vessel (1) is carried out by resistance welding.

5.  A method according to claim 4, characterised in that the welding electrodes (6 and 6a) for welding on the handle (3, 10) are held at a very small lateral distance from the reinforcing plate (5) of the vessel (1), so that the current in conducted laterally through the reinforcing plate (5) to the welding site (3a) of the handle (10, 3).

6.  A method according to one of claims 1 to 5, characterised in that the reinforcing plate (5) is designed with a thickness approximately twice the wall thickness of the vessel (1).

7.  A welding device for carrying cut the method according to claim 1 for resistance welding with two electrodes, the two electrodes (6 and 6a) being arranged close together, the electrode (6) being mounted resiliently and in insulation fashion oh a bolder (7) supporting both electrodes, both electrodes (6 and 6a) being arranged directly adjacent one another separated by means of a thin insulating layer and the electrodes (6) being arranged in pairs adjacent one another, the central electrodes being integrally formed as a central electrode (6a), characterised in that the central electrode (6a) is enclosed at least on three sides by the double electrodes (6 ).

8. A welding device according to claim 7, characterised in that the central electrode (6a) comprises a central cut-away section (9) for the introduction of an object (10, 3) to be welded.

**Revendications**

1. Procédé de fabrication d'un récipient métallique (1) à parois minces, muni d'une poignée (3,10) et comportant un revêtement intérieur (2) et une poignée ou une pièce servant à le porter (3,10) procédé selon lequel, après le formage du récipient (1), on soude une plaque de renfort dans la zone de fixation de la poignée (3,10), sur la surface externe (4) du récipient (1), et selon lequel la surface intérieure du récipient (1) est ensuite soumise à un traitement de revêtement, puis la surface externe (4) du récipient (1) est nettoyée mécaniquement, caractérisé en ce qu'ensuite la poignée (3,10) est soudée sur la plaque de renfort (5).

2. Procédé suivant la revendication 1, caractérisé en ce que plusieurs plaques de renfort (5) et poignées (3,10) sont implantées.

3. Procédé suivant la revendication 1 ou la revendication 2, caractérisé en ce que la surface externe (4) est nettoyée au moyen d'un dispositif de meulage ou de brossage.

4. Procédé suivant l'une quelconque des revendications 1 à 3, caractérisé en ce que le soudage de la plaque de renfort (5) et du récipient (1) se fait par soudage par résistance.

5. Procédé suivant la revendication 4, caractérisé en ce que les électrodes de soudage (6 et 6a) pour souder la poignée (3,10) sont maintenues à un très faible écartement latéral contre la plaque de renfort (5) du récipient (1), de telle façon que le courant arrive latéralement jusqu'au point de soudure (3a) de la poignée (10,3) en passant à travers la plaque de renfort (5).

6. Procédé suivant l'une quelconque des revendications 1 à 5, caractérisé en ce que la plaque de renfort (5) est réalisée avec une épaisseur sensiblement double de l'épaisseur de paroi du récipient (1).

7. Dispositif de soudage pour la mise en oeuvre du procédé suivant la revendication 1, pour le soudage par résistance avec deux électrodes, dans lequel les deux électrodes (6 et 6a) sont disposées l'une à côté de l'autre, à faible distance, l'électrode (6) étant montée élastiquement et isolée, sur une fixation (7) portant les deux électrodes, les deux électrodes (6 et 6a) étant disposées directement l'une à côté de l'autre, et séparées au moyen d'une fine couche d'isolation, et l'électrode (6) étant dédoublée en deux électrodes disposées l'une contre l'autre, étant entendu que les électrodes du milieu sont réalisées en une seule pièce sous la forme d'une électrode centrale (6a), caractérisé en ce que l'électrode centrale (6a) est enveloppée au moins sur trois faces par l'électrode dédoublée (6 ).

8. Dispositif de soudage suivant la revendication 7, caractérisé en ce que l'électrode centrale (6a) présente un évidement central (9) pour le passage d'une pièce (10,3) à souder.

Fig. 1

Fig. 2

Fig. 3

EP 0 329 066 B1